# EUROPEAN PATENT APPLICATION

(11) **EP 1 296 481 A1**
(43) Date of publication of application: **26.03.2003**
(21) Application number: 02769578.2
(22) Date of filing: 13.05.2002
(51) Int. Cl.: H04L 12/14, H04L 12/56, H04M 15/00, H04M 11/08

(54) **OBILE COMMUNICATION SERVICE CHARGING APPARATUS AND MOBILE COMMUNICATION SERVICE CHARGING METHOD**

(30) Priority: 14.05.2001 JP 2001143665
(71) Applicant: NTT DoCoMo, Inc., Tokyo 100-6150 (JP)
(72) Inventor: SHIRAI, Ryo, IP Department NTT DoCoMo, Inc., Tokyo 100-6150 (JP); IITAKA, Takeshi, IP Department NTT DoCoMo, Inc., Tokyo 100-6150 (JP); OGURO, Masami, IProperty Department NTT DoCoMo Inc, Tokyo 100-6150 (JP); NAKANISHI, Masayuki, IP Dept. NTT DoCoMo, Inc., Tokyo 100-6150 (JP); KIKKAWA, Miho, IP Department NTT DoCoMo, Inc., Tokyo 100-6150 (JP)
(74) Representative: Rees, Alexander Ellison
(86) International application number: JP0204615
(87) International publication number: WO02093835

(57) **Abstract**

A mobile communications service control apparatus comprises signal processing means for conducting prescribed signal processing of a packet transmitted from a mobile terminal or preset communications-equipment, information restoring means for restoring information of a layer higher than a transmitted layer of the signal-processed packet, and service providing means for providing a service in accordance with the contents of the restored information.

## Description

### TECHNICAL FIELD

The present invention relates to an apparatus and a method of calculating and charging communication rates for various types of mobile communications services.

### BACKGROUND ART

In recent years, various types of mobile communications services have come to be offered over mobile communications networks. One example of such services is distributing contents on the Internet to mobile terminals. When distributing contents via the network, the quantity of packets transmitted from content delivery equipment to a mobile terminal, and the quantity of packets transmitted from the mobile terminal to the content delivery equipment are measured to calculate a communication rate in accordance with the quantities of the packets.

In the conventional content delivery services, communication rates are determined based solely on the quantity of the transmitted packets, without capabilities of taking into account the information value of the content itself. In other words, flexible calculation of the communication rate, for example, reducing the communication rate when delivering content with a lesser value, or increasing the communication rate when delivering content with a higher value, cannot be realized. Accordingly, a demand for a novel charging technique that allows a communication rate to be set flexibly in the coming mobile communication services is arising.

### SUMMARY OF THE INVENTION

The present invention was conceived to overcome the above-described problems in the conventional charging technique, and it is an object of the invention to provide an apparatus and a method of charging for mobile communications services, which are capable of calculating communication rates in a flexible manner.

To achieve the object, a charging apparatus for mobile communications services comprises delivery source extraction means for extracting a delivery source from information that is transmitted and received between a mobile terminal and content delivery equipment when content is delivered from the content delivery equipment to the mobile terminal; charging rule setting means for setting a charging rule for the delivery of the content based on the delivery source extracted by the delivery source extraction means and/or the contents of the information that is transmitted; and charging means for calculating a communication rate for the delivery of the content based on the charging rule set by the charging rule setting means.

With this charging apparatus, a charging rule is assigned to each set of content to be delivered, in accordance with the contents of the information transmitted between the content delivery equipment and the mobile terminal. A communication rate for the content delivery service is calculated based on the assigned charging rule. Consequently, flexible calculation of the communication rate can be achieved.

The charging apparatus for mobile communications services further comprises charging rule registration means for registering one or more charging rules. In this case, the charging rule setting means selects the charging rule from among the registered charging rules, on the basis of the contents of the information.

The delivery source extraction means of the charging apparatus extracts delivery source information that is transmitted together with the content from the content delivery equipment to the mobile terminal.

The delivery source information is, for example, a URL (uniform resource locator) assigned to each set of content by one-to-one correspondence and indicating the location of the content on the Internet. In this case, the charging rule is set based on the extracted delivery source information, which eventually corresponds to the content to be delivered. Consequently, the communication rate is calculated flexibly, depending on which content is delivered.

From the same standpoint, the delivery source extraction means extracts delivery source information from a content delivery request transmitted from the mobile terminal to the content delivery equipment.

The charging apparatus further comprises charging rule extraction means for extracting the charging rule that is transmitted together with the content from the content delivery equipment to the mobile terminal. Then, the charging rule setting means selects the extracted charging rule for the content delivery service.

In this case, the communication rate is calculated in compliance with the charging rule transmitted together with the content from the content provider. Even if the content provider changes the charging rule, such a change is immediately reflected in the fee calculation.

Alternatively, in the charging apparatus for mobile communication services, the delivery source extraction means extracts delivery source information contained in the content delivery request transmitted from the mobile terminal to the content delivery equipment, and then, the charging rule setting means selects the charging rule that is transmitted from the content delivery equipment defined by the extracted delivery source information as this charging rule being in accordance with the contents of the information.

With this arrangement, if the delivery source information corresponds to the content by one-to-one correspondence, then the charging rule corresponding to the contents of the information is assigned to each set of the content, and therefore, the communication rate is calculated flexibly.

The charging apparatus for mobile communication services further comprises information quantity measurement means for measuring the quantity of the information transmitted and received between the content delivery equipment and the mobile terminal. In this case, the charging means calculates the communication rate, in accordance with the measured quantity of the information, based on the charging rule determined by the charging rule setting means.

In a charging method for mobile communications services according to the present invention, a delivery source is extracted from information transmitted and received between content delivery equipment and a mobile terminal, when content is delivered from the content delivery equipment to the mobile terminal. Then, a charging rule is set for the delivery of the content based on the extracted delivery source and/or the contents of the information that is transmitted. A communication rate in conjunction with the delivery of the content is calculated based on the charging rule.

If one or more charging rules may be registered in advance, then the charging rule may be selected from among the registered charging rules, depending on the contents of the information.

Delivery source information that is transmitted together with the content from the content delivery equipment to the mobile terminal may be extracted to identify the delivery source.

Alternatively, delivery source information may be extracted from a content delivery request transmitted from the mobile terminal to the content delivery equipment.

To set the charging rule, a charging rule that is transmitted together with the content from the content delivery equipment to the mobile terminal may be extracted. In this case, the extracted charging rule is used to calculate the communication rate for the delivery of the content.

In an alternative, delivery source information is extracted from a content delivery request transmitted from the mobile terminal to the content delivery equipment, and then, the charging rule transmitted from the content delivery equipment that is defined by the extracted delivery source information is selected as the charging rule being in accordance with the contents of the information transmitted between the mobile terminal and the content delivery equipment.

Furthermore, the quantity of the information transmitted between the content delivery equipment and the mobile terminal is measured, and the communication rate is calculated, in accordance with the measured quantity of the information, based on the determined charging rule.

Other objects, features, and advantages of the invention will become more apparent from the following detailed description when read in conjunction with the accompanying drawings.

### BRIEF DESCRIPTION OF THE DRAWINGS

FIG. 1 illustrates a structural example of a mobile communications service charging apparatus according to the present invention;
FIG. 2 illustrates a structural example of the packet collection equipment used in the mobile communications service charging apparatus shown in FIG. 1;
FIG. 3 illustrates examples of the charging rules;
FIG. 4 illustrates an operational sequence of the charging apparatus for mobile communications services according to the first embodiment of the invention; and
FIG. 5 illustrates an operational sequence of the charging apparatus for mobile communications services according to the second embodiment of the invention.

### BEST MODE TO CARRY OUT THE INVENTION

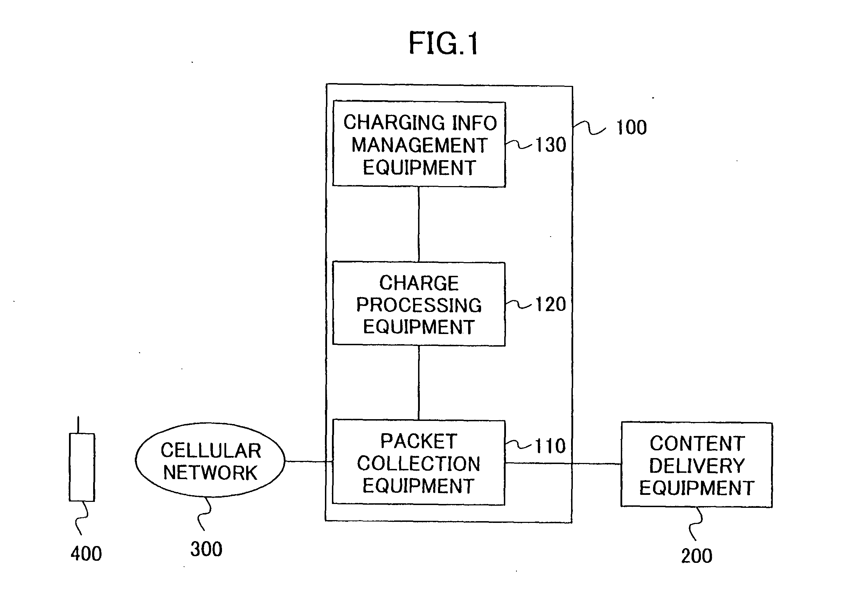

Embodiments to implement the present invention will now be described with reference to the attached drawings. FIG. 1 illustrates a structural example of the mobile communications service charging apparatus according to the embodiments of the present invention.

The mobile communications service charging apparatus 100 calculates a communication rate in accordance with the quantity of information transmitted and received between the content delivery equipment 200 and a cellular phone (or a mobile terminal) 400, based on either the charging rule registered in advance for each set of content by the owner of the content delivery equipment 200 (that is, the content provider), or the charging rule transmitted together with the content from the content delivery equipment 200.

The mobile communications service charging apparatus 100 is connected to the content delivery equipment 200, and also connected to the cellular phone 400 via the cellular network 300. The charging apparatus 100 is comprised of packet collection equipment 110, charge processing equipment 120, and charging information management equipment 130.

The packet collection equipment 110 acquires a TCP (transmission control protocol) packet transmitted from the content delivery equipment 200 to the cellular phone 400, as well as a TCP packet transmitted from the cellular phone 400 to the content delivery equipment 200.

The packet collection equipment 110 analyzes the transmission/receiving addresses and the transmission/receiving port numbers contained in the headers of the received TCP packets, and gathers the TCP packets containing the same transmission/receiving addresses and the same transmission/receiving ports to reconstruct the HTTP (hyper text transfer protocol) data.

The HTTP data reconstructed from those TCP packets transmitted from the cellular phone 400 to the content delivery equipment 200 are an HTTP request that constitutes a content delivery request from the cellular phone 400 to the content delivery equipment 200. On the other hand, the HTTP data reconstructed from the TCP packets transmitted from the content delivery equipment 200 to the cellular phone 400 are an HTTP response produced by the content delivery equipment 200 in response to the HTTP request. The HTTP response contains data of the content to be delivered.

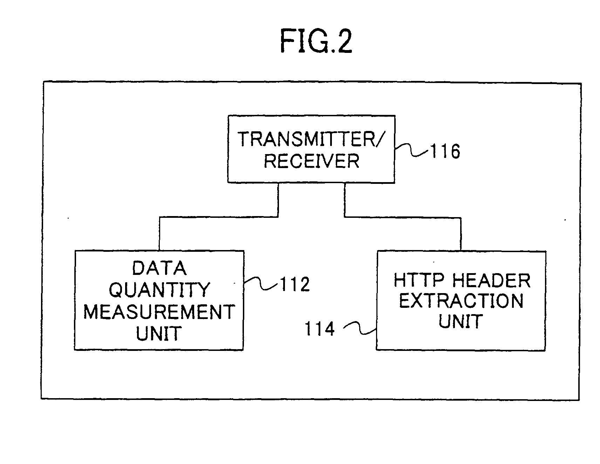

FIG. 2 illustrates the packet collection equipment 110 shown in FIG. 1. As illustrated in FIG. 2, the packet collection equipment 110 has a data quantity measurement unit 112, an HTTP header extraction unit 114 that extracts the URL (uniform resource locator) from the received packet, and a transmitter/receiver 116 that transmits and receives information to and from the charge processing equipment 120. With this structure, the packet collection equipment 110 measures the data quantities of the reconstructed HTTP request and HTTP response, and supplies the measurement result to the charge processing equipment 120. The packet collection equipment 110 also extracts the URL (uniform resource locator), which indicates the location of the content within the content delivery equipment 200, from the header of the reconstructed HTTP request. The extracted URL corresponds to the content requested by the cellular phone 400 by one-to-one correspondence. The packet collection equipment 110 supplies the URL to the charge processing equipment 120, together with the measurement result of the data quantities of the HTTP request and the HTTP response.

If a charging rule is transmitted, together with the content, from the content delivery equipment 200, then the packet collection equipment 110 extracts the charging rule from the header of the reconstructed HTTP response, and supplies the extracted charging rule to the charge processing equipment 120, together with the measurement result of the data quantities of this HTTP response and the URL extracted from the header of the HTTP request.

Upon receiving the URL from the packet collection equipment 110, the charge processing equipment 120 sets a charging rule that corresponds to the content requested by the cellular phone 400 and delivered by the content delivery equipment 200.

To be more precise, if the charging rule is registered in advance by the content provider, then the charge processing equipment 120 transfers the URL received from the packet collection equipment 110 to the charging information management equipment 130 to acquire the corresponding charging rule.

The charging information management equipment 130 has a charging rule database (not shown) that stores the charging rules, which are registered in advance by the content provider, in association with the URLs representing the locations of the contents. When receiving the URL from the charge processing equipment 120, the charging information management equipment 130 retrieves in the charging rule database the charging rule that corresponds to the received URL.

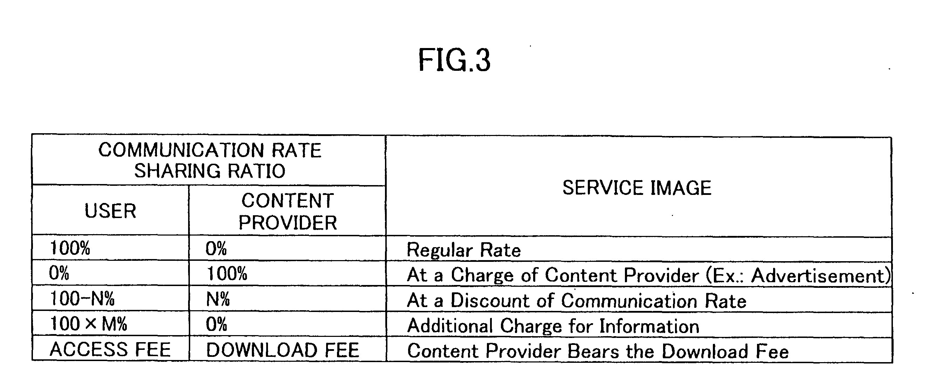

FIG. 3 illustrates some examples of the charging rules. These examples show the sharing ratio of the communication rate shared between the user of the cellular phone 400 and the content provider. There are many other charging rules, for example, varying the communication rate depending on the day and time by setting a regular rate on weekdays and a discounted rate on Saturday and Sunday, or alternatively, setting a regular rate in the day time and a discounted rate at night.

The charging information management equipment 130 supplies the retrieved charging rule to the charge processing equipment 120. Upon receiving the charging rule, the charge processing equipment 120 uses this charging rule to calculate the communication rate, according to the data quantity of the HTTP request containing the URL associated with the selected charging rule and the data quantity of the HTTP response delivered in response to the HTTP request.

If the charging rule is transmitted, together with the content, from the content delivery equipment 200 when delivering the content, then the charge processing equipment 120 receives the charging rule that is extracted by and supplied from the packet collection equipment 110.

The charge processing equipment 120 uses the charging rule supplied from packet collection equipment 110 to calculate a communication rate in accordance with the data quantity of the HTTP response containing this charging rule in the header, and a communication rate in accordance with the data quantity of the HTTP request that causes the HTTP response.

The packet collection equipment 110 determines which HTTP request corresponds to the HTTP response that contains the charging rule, and informs the charge processing equipment 120 of the determination result. The charge processing equipment 120 calculates the communication rate, in accordance with the data quantity of this HTTP communication, using the URL contained in the header of the HTTP request and the charging rule contained in the header of the associated HTTP response.

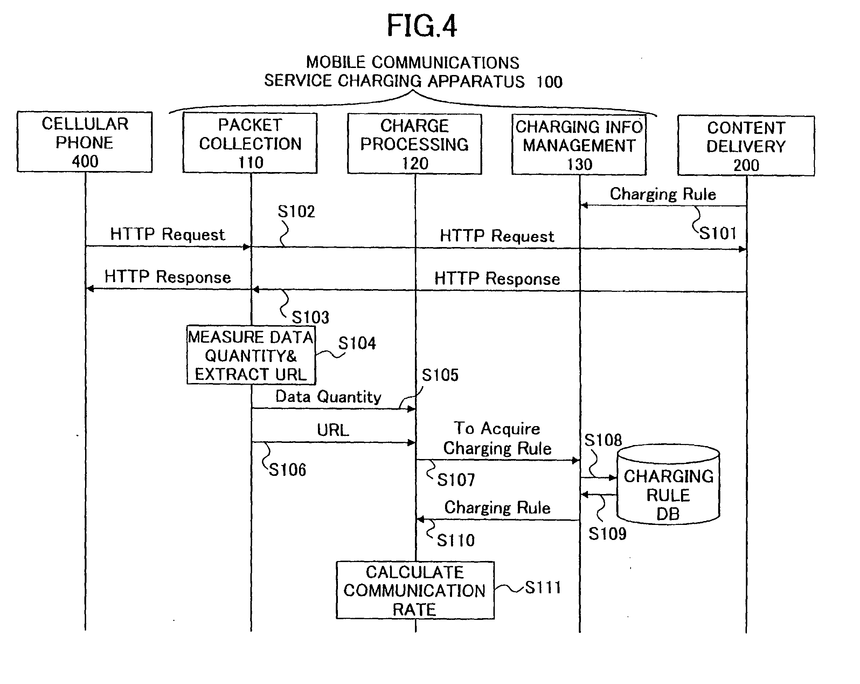

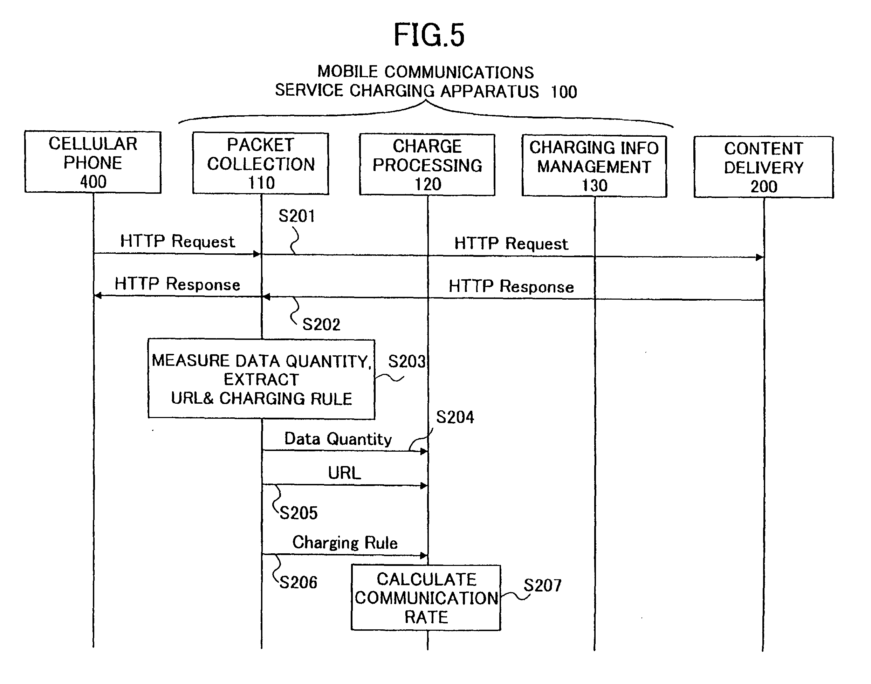

Next, explanation will be made, using sequence diagrams, of the operational sequence of the mobile communications service charging apparatus 100 according to the embodiments of the invention. In the first embodiment illustrated in FIG. 4, the charging rule is registered in advance by the content provider, and in the second embodiment illustrated in FIG. 5, the charging rule is transmitted together with the content from the content delivery equipment.

In FIG. 4, the charging information management equipment 130 receives data about the charging rule provided by the content delivery equipment 200, and registers this charging rule in the charging rule database (step S101).

After the charging rule has been registered in the charging rule database, the packet collection equipment 110 receives a TCP packet representing an HTTP request, and forwards this TCP packet to the content delivery equipment 200 (step S102). The HTTP request is transmitted from the cellular phone 400 prior to delivery of the content from the content delivery equipment 200.

The packet collection equipment 110 then receives a TCP packet representing an HTTP response, which is transmitted from the content delivery equipment 200 in response to the HTTP request, and forwards this TCP packet to the cellular phone 400 (step S103).

The packet collection equipment 110 reconstructs the HTTP request and the HTTP response from the TCP packets. The packet collection equipment 110 measures the data quantities of the HTTP request and the HTTP response, and extracts the URL from the header of the HTTP request (step S104). Then, the packet collection equipment 110 supplies the data quantities of the HTTP request and the HTTP response, as well as the extracted URL, to the charge processing equipment 120 (steps S105, S106).

Upon receiving the URL and the data quantities of the HTTP request and the HTTP response, the charge processing equipment 120 supplies the URL to the charging information management equipment 130 to acquire the charging rule (step S107).

Upon receiving the URL from the charge processing equipment 120, the charging information management equipment 130 retrieves in the charging rule database, using the URL as a key, the charging rule corresponding to this URL (steps S108 and S109). The charging information management equipment 130 then supplies the retrieved charging rule to the charge processing equipment 120 (step S110).

Upon receiving the charging rule, the charge processing equipment. 120 uses this charging rule to calculate a communication rate in accordance with the data quantities of the HTTP response and the HTTP request containing the URL that corresponds to this charging rule (step S111).

FIG. 5 is a sequence diagram showing the operations of the mobile communications service charging apparatus 100 according to the second embodiment of the invention. The packet collection equipment 110 receives a TCP packet representing an HTTP request, which is transmitted from the cellular phone 400 prior to delivery of content by the content delivery equipment 200, and forwards this TCP packet to the content delivery equipment 200 (step S201) .

The packet collection equipment 110 then receives a TCP packet representing an HTTP response, which is transmitted from the content delivery equipment 200 in response to the HTTP request, and forwards this TCP packet to the cellular phone 400 (step S202).

The packet collection equipment 110 reconstructs the HTTP request and the HTTP response from the received TCP packets. The packet collection equipment 110 measures the data quantities of the HTTP request and the HTTP response. The packet collection equipment 110 extracts the URL from the header of the HTTP request, and extracts the charging rule from the header of the HTTP response (step S203).

Then, the packet collection equipment 110 supplies the data quantities of the HTTP request and the HTTP response, as well as the extracted URL and charging rule, to the charge processing equipment 120 (steps S204-S206).

Upon receiving the URL, the charging rule, and the data quantities of the HTTP request and the HTTP response, the charge processing equipment 120 uses this charging rule to calculate a communication rate, in accordance with the data quantity of the HTTP response containing this charging rule in the header, and the data quantity of the HTTP request associated with this HTTP response (step S207).

Thus, according to the first embodiment of the invention, the mobile communications service charging apparatus 100 registers the charging rule provided by a content provider in advance in the charging rule database. When content is delivered from the content delivery equipment 200 to the cellular phone 400, the mobile communications service charging apparatus 100 reconstructs the HTTP request and the HTTP response from the TCP packets transmitted between the content delivery equipment 200 and the cellular phone 400, and measures the data quantities of the HTTP request and the HTTP response. At the same time, the charging apparatus 100 extracts the URL from the header of the HTTP request, and retrieves in the charging rule database the charging rule that corresponds to the URL. The charging apparatus 110 then uses the retrieved charging rule to calculate the communication rate in accordance with the data quantities of the HTTP request and the HTTP response.

According to the second embodiment of the invention, the mobile communications service charging apparatus 100 reconstructs the HTTP request and the HTTP response from the TCP packets transmitted between the content delivery equipment 200 and the cellular phone 400 when content is delivered from the content delivery equipment 200 to the cellular phone 400. The charging apparatus 100 measures the data quantities of the reconstructed HTTP request and HTTP response. The charging apparatus 100 also extracts the URL from the header of the HTTP request, and extracts the charging rule from the header of the HTTP response. The charging apparatus 100 uses the extracted charging rule to calculate the communication rate in accordance with the data quantities of the HTTP request and the HTTP response.

In either case above, a charging rule is selected for each set of content to be delivered to the cellular phone, and a communication rate is calculated in compliance with the selected charging rule, in accordance with the data quantities of the HTTP request and the HTTP response. Consequently, a communication rate can be set in a flexible manner.

In the above-described embodiment, the mobile communications service charging apparatus 100 extracts the URL from the header of the HTTP request and select the charging rule that is associated with this URL to calculate the communication rate; however, some other identifier for identifying the content may be used. For example, the file extension of the content data may be extracted from the HTTP response, and the charging rule that is associated with the file extension may be set for fee calculation. As long as an appropriate charging rule is selected for each set of content delivered from the content delivery equipment 200, any types of identifier may be used.

In conclusion, since the charging rule is assigned to each set of content and the communication rate for the delivery of the desired content is calculated complying with the appropriate charging rule, the communication rate can be determined flexibly.

## Claims

1. A mobile communications service charging apparatus comprising:
delivery source extraction means for extracting a delivery source from information that is transmitted and received between content delivery equipment and a mobile terminal when content is delivered from the content delivery equipment to the mobile terminal;
charging rule setting means for setting a charging rule for the delivery of the content based on the delivery source extracted by the delivery source extraction means and/or the contents of the information that is transmitted; and
charging means for calculating a communication rate for the delivery of the content based on the charging rule set by the charging rule setting means.

2. The mobile communications service charging apparatus according to claim 1, further comprising;
charging rule registration means for registering one or more charging rules, wherein the charging rule setting means select the charging rule for the delivery of the content from among the registered charging rules, based on the contents of the information that is transmitted.

3. The mobile communications service charging apparatus according to claim 1 or 2, wherein the delivery source extraction means extract the delivery source that is transmitted together with the content from the content delivery equipment to the mobile terminal.

4. The mobile communications service charging apparatus according to claim 1 or 2, wherein the delivery source extraction means extract the delivery source from a content delivery request transmitted from the mobile terminal to the content delivery equipment.

5. The mobile communications service charging apparatus according to claim 1, further comprising:
charging rule extraction means for extracting the charging rule that is transmitted together with the content from the content delivery equipment to the mobile terminal, wherein the charging rule setting means select the charging rule extracted by the charging rule extraction means for the delivery of the content.

6. The mobile communications service charging apparatus according to claim 5, wherein the delivery source extraction means extract the delivery source contained in a content delivery request transmitted from the mobile terminal to the content delivery equipment, and
the charging rule setting means select the charging rule that is transmitted from the content delivery equipment defined by the extracted delivery source, the selected charging rule corresponding to the contents of the information that is transmitted.

7. The mobile communications service charging apparatus according to any one of claims 1 through 6, further comprising:
information quantity measurement means for measuring quantity of the information transmitted and received between the content delivery equipment and the mobile terminal, wherein the charging means calculate the communication rate in accordance with the quantity of the information measured by the information quantity measurement means, based on the charging rule set by the charging rule setting means.

8. A mobile communications service charging method comprising:
extracting a delivery source from information that is transmitted and received between a content delivery equipment and a mobile terminal when content is delivered from the content delivery equipment to the mobile terminal;
setting a charging rule based on the extracted delivery source and/or the contents of the information that is transmitted; and
calculating a communication rate for the delivery of the content based on the charging rule.

9. The mobile communications service charging method according to claim 8, further comprising:
registering one or more charging rules; and
selecting the charging rule from among the registered charging rules in accordance with the contents of the information that is transmitted.

10. The mobile communications service charging method according to claim 8 or 9, wherein the delivery source is extracted by extracting delivery source information that is transmitted together with the content from the content delivery equipment to the mobile terminal.

11. The mobile communications service charging method according to claim 8 or 9, wherein the delivery source is extracted by extracting delivery source information from a content delivery request transmitted from the mobile terminal to the content delivery equipment.

12. The mobile communications service charging method according to claim 1, further comprising:
extracting the charging rule that is transmitted together with the content from the content delivery equipment to the mobile terminal, wherein the charging rule is set by selecting the extracted charging rule.

13. The mobile communications service charging method according to claim 12, wherein the delivery source is extracted by extracting delivery source information from a content delivery request transmitted from the mobile terminal to the content delivery equipment, and the charging rule is set by selecting the extracted charging rule that is transmitted from the content delivery equipment defined by the delivery source information.

14. The mobile communications service charging method according to any one of claims 8 through 13, further comprising:
measuring quantity of the information transmitted and received between the content delivery equipment and the mobile terminal; and
calculating the communication rate in accordance with the measured quantity of the information based on the charging rule.
